Europäisches Patentamt

European Patent Office

Office européen des brevets

(19)

(11) Publication number: **0 117 614**
**A2**

(12)

# EUROPEAN PATENT APPLICATION

(21) Application number: **84300377.3**

(22) Date of filing: **23.01.84**

(51) Int. Cl.³: **G 05 B 19/405**

(30) Priority: **31.01.83 JP 14408/83**

(43) Date of publication of application: **05.09.84**
**Bulletin 84/36**

(84) Designated Contracting States: **DE FR GB**

(71) Applicant: **FANUC LTD, 5-1, Asahigaoka 3-chome Hino-shi, Tokyo 191 (JP)**

(72) Inventor: **Nagamine, Tsuyoshi, 11-9, Owada-cho 7-chome Hachioji-shi, Tokyo, 192 (JP)**
Inventor: **Inoue, Tsuyoshi, 313, Toyoda corporus 15-1, Higashitoyada, 3-chome Hino-shi Tokyo 191 (JP)**
Inventor: **Toriyama, Shuji, Midori-wo, 5-8, Fukasawa 8-chome Setagaya-ku, Tokyo, 158 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **Graphic display unit for numerical controllers.**

(57)  A color display unit for numerical controllers is provided with means for displaying a finished shape (83), a finishing allowance profile (82), a blank profile (81), a tool profile (84) and a chuck profile (80) in painted-out graphic forms and in different colors, thereby facilitating their visual recognition.

EP 0 117 614 A2

-1-

GRAPHIC DISPLAY UNIT FOR NUMERICAL CONTROLLERS

The present invention relates to a graphic display unit for numerical controllers.

Recently there has been proposed a numerical controller provided with a graphic display unit which displays, in addition to the profiles or shapes of a blank, a tool and a chuck, a finished shape and the shape of a finishing allowance through utilization of the loci of the tool obtained by a provisional execution of an NC machining program. With the provision of such a graphic display, a check on the NC machining program has been made far easier than in the past. According to proposed display units of this kind, however, the finished shape, the shape of the finishing allowance, the blank profile, the tool profile and the chuck shape are all displayed with contour lines, and the regions of areas surrounded by the contour lines are all displayed in the same color (ground color). Therefore, the proposed display units have the defect that a clear recognition of each part is unexpectedly difficult in a visual inspection of the NC machining program on the display screen, introducing the possibility of a misjudgement on the validity of the program.

-2-

It is therefore an object of the present invention to provide a graphic display unit for numerical controllers which does not display a finished shape, a finishing allowance shape, a blank profile, a tool profile and a chuck shape in the form of their contour lines alone, but instead paints out their regions or areas in different colors, thereby facilitating the recognition of their shapes to ensure easy checking of an NC machining program.

According to the present invention there is provided a graphic display unit for numerical controllers, comprising:

NC machining program memory means for storing an NC machining program;

blank profile memory means for storing data on the profile of a blank;

chuck shape memory means for storing data on the shape of a chuck;

tool profile memory means for storing data on the profile of a tool;

color information memory means for storing information on a color to be used for each profile;

a plurality of picture RAMs, each having storage areas corresponding to dots of a display screen;

graphic form producing means for writing, into those of the plurality of picture RAMs which are specified by the color information, painted-out graphic forms of a finished shape, a finishing allowance profile,

-3-

a blank profile, a chuck shape and a tool profile produced on the basis of the stroed information of the NC machining program memory means, the blank profile memory means, the chuck shape memory means and the tool profile memory means; and

a color graphic display coupled to the outputs of the plurality of picture RAMs to display graphic forms in colors defined by combinations of the picture RAMs.

For a better understanding of the invention and to show how it may be put into effect, reference will now be made by way of example to the accompanying drawings, in which:

Fig. 1 is a block diagram illustrating the arrangement of a color graphic display unit of the present invention;

Fig. 2 is a block diagram illustrating an example of the hardware arrangement of a color graphic display unit of the present invention;

Fig. 3 is a flowchart showing an example of software for implementing a part of the graphic form producing function of a color graphic display unit of the present invention;

Figs. 4 to 7 are diagrams explanatory of the operation of the embodiment shown in Fig. 2;

Fig. 8 is a diagram schematically illustrating an example of a displayed picture;

Fig. 9 is a flowchart showing an example of the

-4-

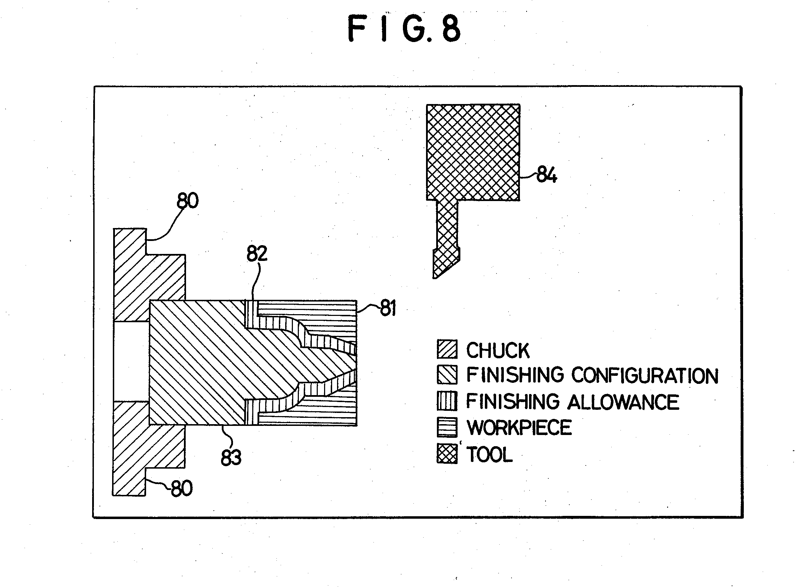

software arrangement for providing such a display as depicted in Fig. 8;

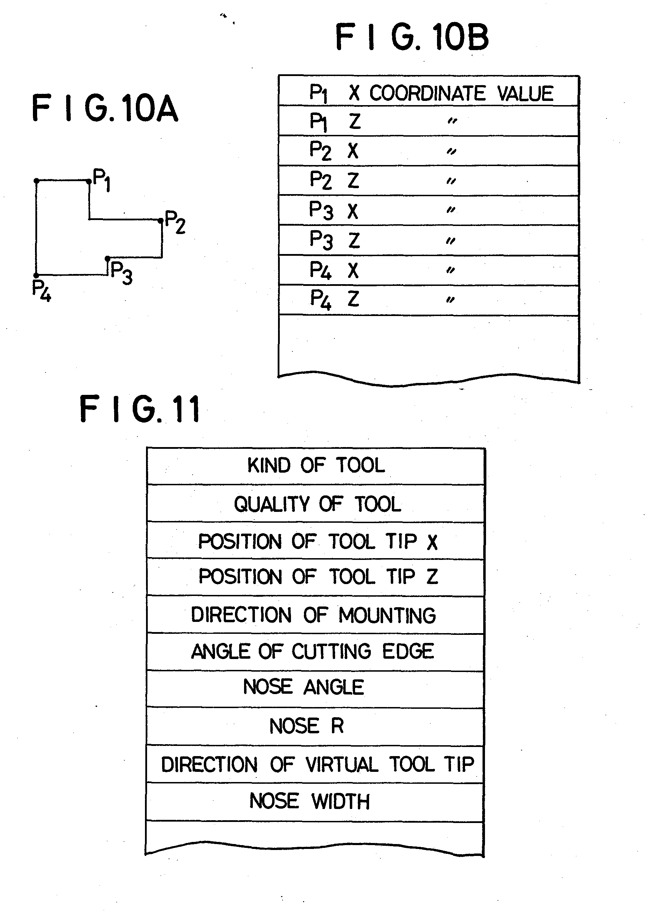

Fig. 10 is a diagram explanatory of a chuck shape file memory; and

Fig. 11 is a diagram explanatory of a tool profile memory.

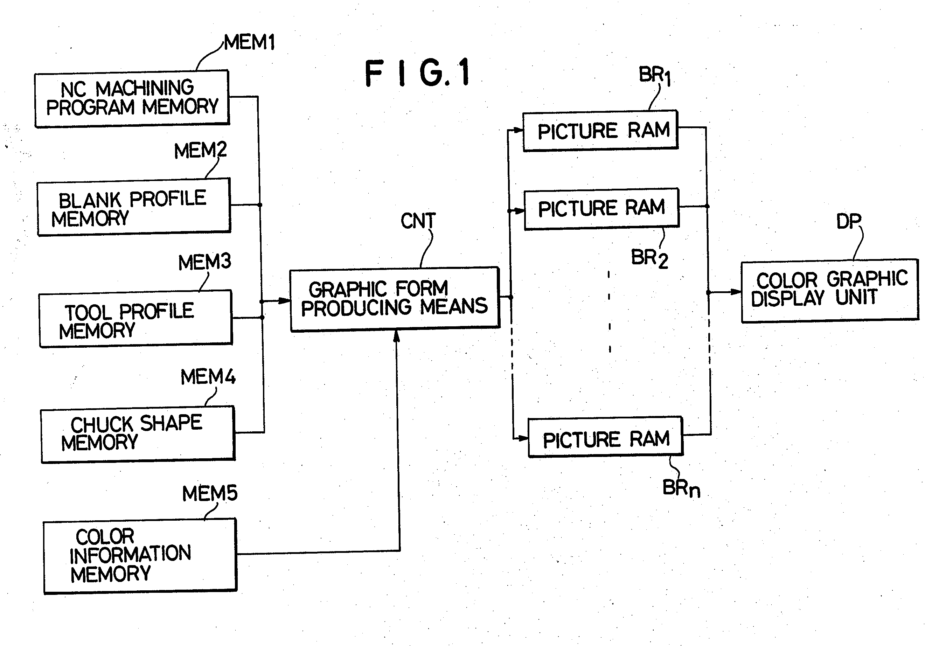

As shown in Fig. 1, an NC machining program, data on the blank profile, data on the tool profile, data on the chuck shape and information on colors for the respective profiles are stored in an NC machining program memory MEM1, a blank profile memory MEM2, a tool profile memory MEM3, a chuck shape memory MEM4 and a color information memory MEM5, respectively. By graphic form producing means CNT, painted-out graphic forms of a finished shape, a finishing allowance profile, the blank profile, the chuck shape and the tool profile, which are produced on the basis of the stored information of the memories MEM1, MEM2, MEM3 and MEM4 are written into those of a plurality of picture RAMs $BR_1$ to $BR_n$ which are specified by the color information . A color graphic display DP receives the outputs of the plurality of picture RAMs and displays a graphic form in a color or colors defined by a combination of the picture RAMs.

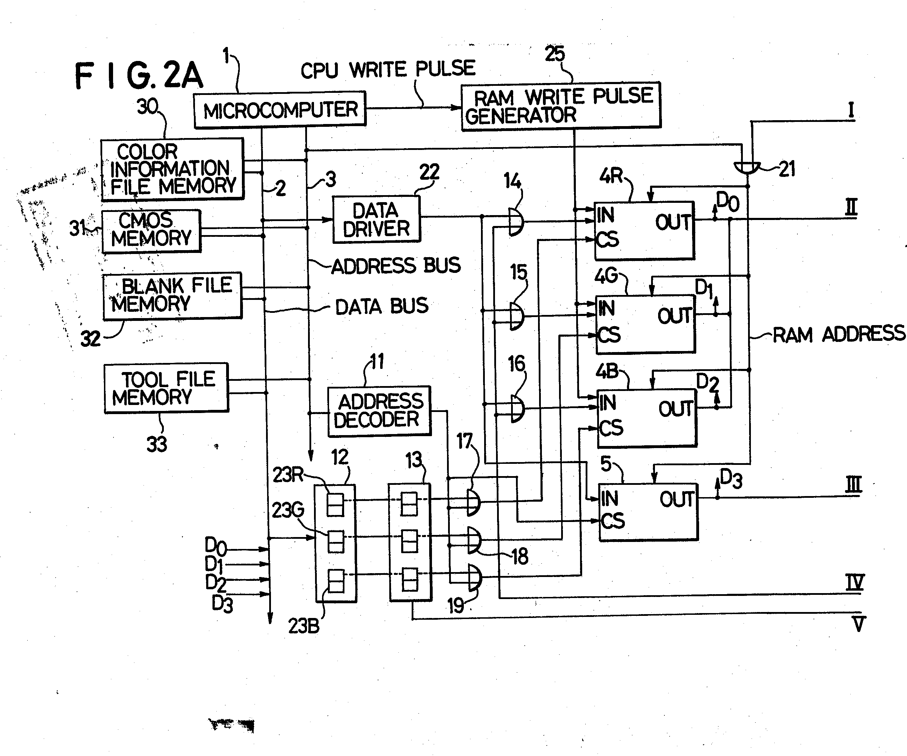

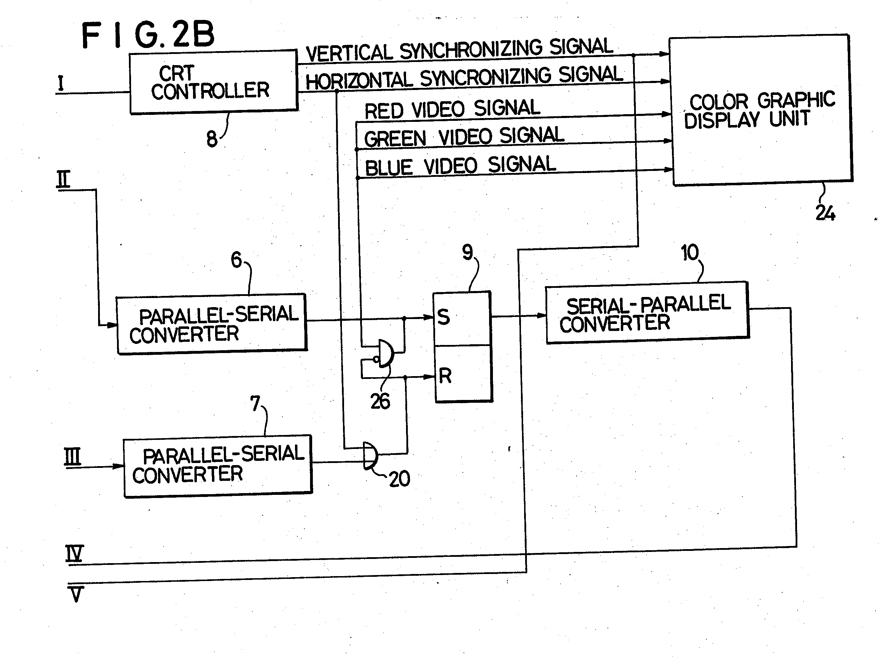

In Fig. 2, reference numeral 1 indicates a microcomputer; 2 and 3 designate its data and address buses; 4R identifies a red picture RAM; 4G denotes a green picture RAM; 4B represents a blue picture RAM;

5 shows a work RAM, 6 and 7 refer to parallel-serial converters; 8 signifies a CRT controller; 9 signifies a flip-flop; 10 indicates a serial-parallel converter; 11 designates an address decoder; 12 identifies a picture specifying information latch circuit; 13 denotes a vertical synchronizing signal synchronizer; 14 to 19 and 21 represent input switching circuits; 20 shows an OR circuit; 22 refers to a data driver; 23R, 23G and 23B signify latch circuits; 24 indicates a color graphic display; 25 designates a RAM write pulse generator; 26 identifies a gate circuit; 30 denotes a color information file memory; 31 represents a CMOS memory; 32 shows a blank file memory; and 33 refers to a tool file memory.

In Fig. 2, the red, green and blue picture RAMs 4R, 4G and 4B are read/write memories for storing graphic forms to be displayed, and each have storage areas corresponding to dots of a displayed picture. Of one picture, an area stored only in the red picture RAM 4B is displayed in red, and an area stored only in the green or blue picture RAM 4G or 4B is displayed in green or blue. An area written in two or more picture RAMs is displayed in a mixed color. The work RAM 5 is a write/read memory which is used for a paint-out work described later, and has storage areas corresponding to the storage areas of the picture RAMs 4R, 4G and 4B. These picture RAMs 4R, 4G and 4B are accessible by the microcomputer 1 to write therein information at desired addresses or to read out therefrom the stored information. Further, their entire areas are sequentially and synchronously accessed by scanning addresses of the CRT controller 8 and the contents of the picture RAMs 4R, 4G and 4B are repeatedly output to the parallel-serial converters 6 and 7 with a fixed period. The output of the serial-parallel converter 10 is provided to the inputs of the picture RAMs 4R, 4G and 4B, and these RAMs are rewritten by this input, too.

The picture specifying information latch circuit 12 specifies the picture RAM which is rewritten by the output of the serial-parallel converter 10. The picture specifying information latch circuit 12 includes latch circuits 23R, 23G and 23B which are used for specifying the red, green and blue picture RAMs 4R, 4G and 4B, respectively. The outputs of the latch circuits 23R, 23G and 23B are provided to chip select terminals CS of the picture RAMs 4R, 4G and 4B after being synchronized by the vertical synchronizing signal synchronizer 13 which is supplied with a vertical synchronizing signal from the CRT controller 8.

The parallel bit outputs of the picture RAMs 4R, 4G and 4B, provided to the parallel-serial converter 6, and the parallel bit output of the work RAM 5, provided to the parallel-serial converter 7, are both converted into serial bit outputs. The output of the parallel-serial converter 6 is applied to a set input terminal of the flip-flop 9, whereas the output of the parallel-serial converter 7 is provided to a reset terminal of the flip-flop 9. The flip-flop 9 is reset by a horizontal synchronizing signal applied thereto via the OR circuit 20 from the CRT controller 8 as well. The output of the flip-flop 9 is converted by the serial-parallel converter 10 into a parallel bit output, which is fed back to the inputs of the picture RAMs 4R, 4G and 4B, as described previously.

The color graphic display 24 receives the output of the parallel-serial converter 6 as red, green and blue video signals, and displays, on its screen, a graphic form in a color depending upon a combination of the abovesaid color video signals. Incidentally, the parallel-serial converter 6 is shown in the form of one block for convenience of illustration but, in practice, it includes parallel-serial converters equal in number to the colors used, i. e. red, green and blue, and they are arranged so that their outputs are switched between the color graphic display 24 and the flip-flop 9. It is also possible, of course, to provide a parallel-serial converter for the paint-out work, separately of the parallel-serial converters for display use.

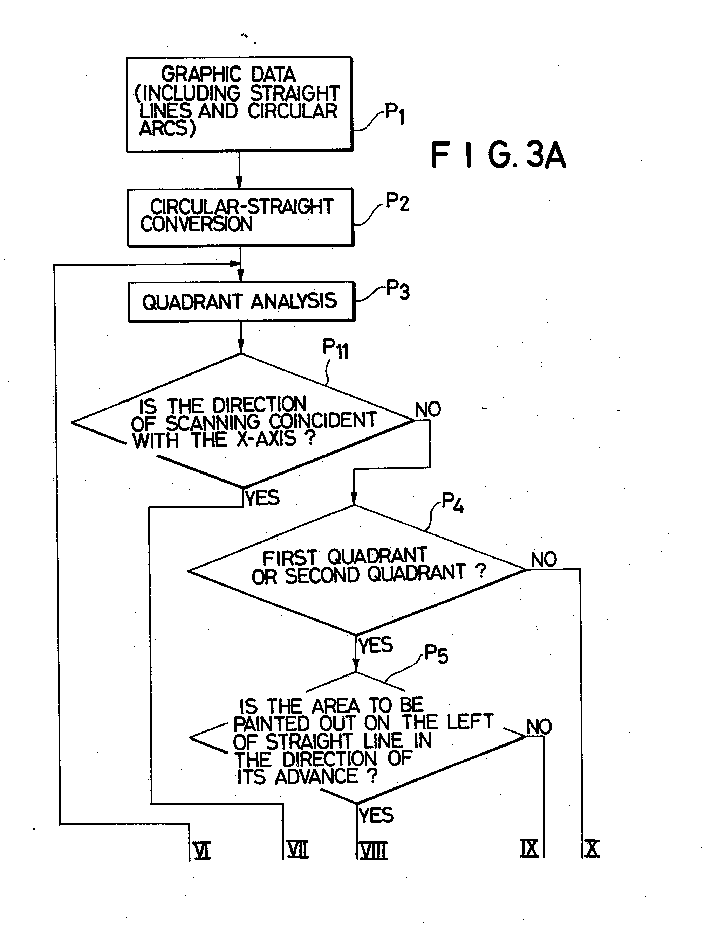

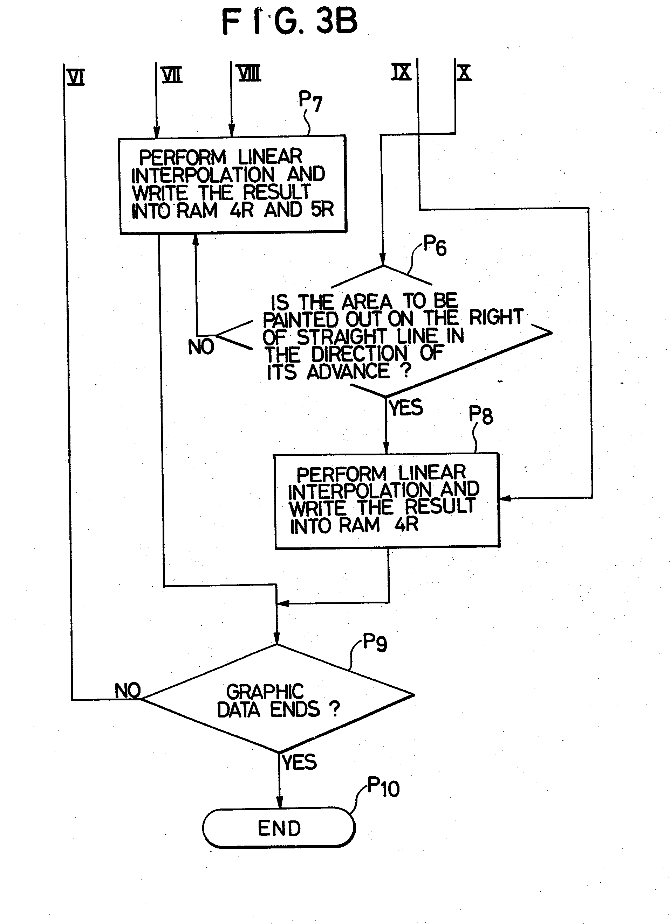

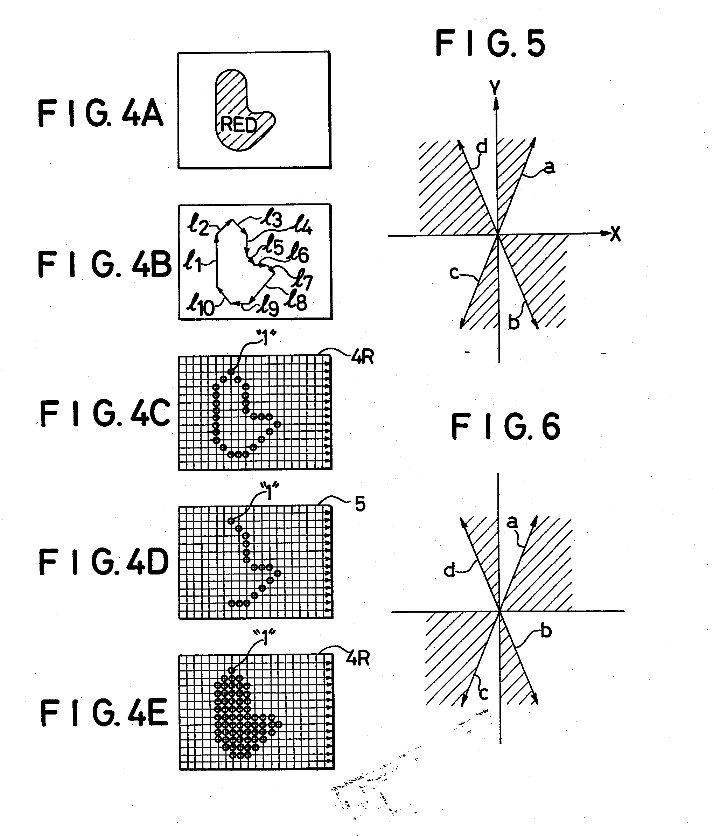

Fig. 3 is a flowchart showing an example of software for implementing the graphic form producing function of a color graphic display unit of the present invention. For example, in a case of displaying, in red, a graphic form of such a shape as shown in Fig. 4A, it is necessary to write a "1" in the area of the red picture RAM 4R which corresponds to

the plane figure of the graphic form/it is desired to display.  A
description will be given first, of the graphic form producing
function of the unit of this embodiment in connection with the
abovesaid case.

Graphic data on the contour of the plane figure is
separately produced or input, and the microcomputer 1 approximates all the graphic data by straight lines through using
known circular-straight  conversion or like techniques (step
P2). . This means that the contour of the graphic form shown in
Fig. 4A is divided into segments $\ell_1$ to $\ell_{10}$ as shown in Fig. 4B.
Next, the contour of the graphic form thus approximated by the
straight lines is written into the red picture RAM 4R and, in
order to write in the work RAM 5 the terminating point of the
graphic form painting-out work, the quadrant in which each
straight line lies is checked using the starting point of the
straight line (step P3).  This can be achieved by checking the
signs of the coordinate values of the starting and terminating
points of the straight line.  Based on the results of this
quardrant analysis and information of the paint-out direction
separately input, the microcomputer 1 performs the following
processing (steps P4 to P9):

(1) In cases where the straight line lies in the first
or second quadrant and the area to be painted out lies on the
left of the straight line with respect to the direction of its
advance, and where the straight line lies in the third or fourth

-10-

quadrant and the area to be painted out is on the right of the straight line relative to the direction of its advance, the microcomputer 1 linearly interpolates the straight line and writes the results in both the red picture RAM 4R and the work picture RAM 5.

(2) In cases where the straight line lies in the first or second quadrant and the area to.be painted out is on the right of the straight line with respect to its direction of advance and where the straight line lies in the third or fourth quadrant and the area to be painted out is on the left of the straight line relative to its direction of advance, the microcomputer 1 linearly interpolates the straight line and writes the results in the red picture RAM 4R.

The reason is as follows: In the case of painting out areas on the left of straight lines a to d relative to the direction of advance as shown in Fig. 5, the straight lines a and d in the first and second quadrants are terminating points of the paint-out work and, in the case of painting out areas on the right of the straight lines a to d relative to the direction of advance as shown in Fig. 6, the straight lines b and c in the third and fourth quadrants are terminating points of the paint-out work. In the case of Fig. 4B, when the direction of travel of the straight lines is determined to be clockwise, the areas on the right of them are painted out; then the straight lines $\ell_1$, $\ell_2$ and $\ell_{10}$ are decided as lying in the first or second quadrant, and the straight lines $\ell_3$ to $\ell_9$ are decided as lying in the third or fourth quadrant. As a result of this, the contour of the graphic form ($\ell_1$ to $\ell_{10}$) is written into the red picture RAM 4R as shown in Fig. 4C, and the positions of terminating points ($\ell_3$ to $\ell_9$) of the paint-out work are written in the work RAM 5 as shown in Fig. 4D. The arrows in Figs. 4C and D indicate the scanning direction. When the lines are coincident with the X-axis, the operation proceeds to step P7 (step P11).

Upon completion of the above processing, the microcomputer 1 specifies the picture RAM to be painted out, and starts the CRT controller 8 so as to carry out the paint-out work by hardware processing. The picture RAM specifying operation is accomplished by the picture specifying information latch circuit 12. In this example, since the red picture RAM 4R is painted out, the latch circuit 23R is set. By this operation, the entire areas of the red picture RAM 4R and the work RAM 5 are accessed in synchronism with each other, and the output of the red picture RAM 4R is provided via the parallel-serial converter 6 to the set terminal of the flip-flop 9 and the output of the work RAM 5 is provided via the parallel-serial converter 7 to the reset terminal of the flip-flop 9.

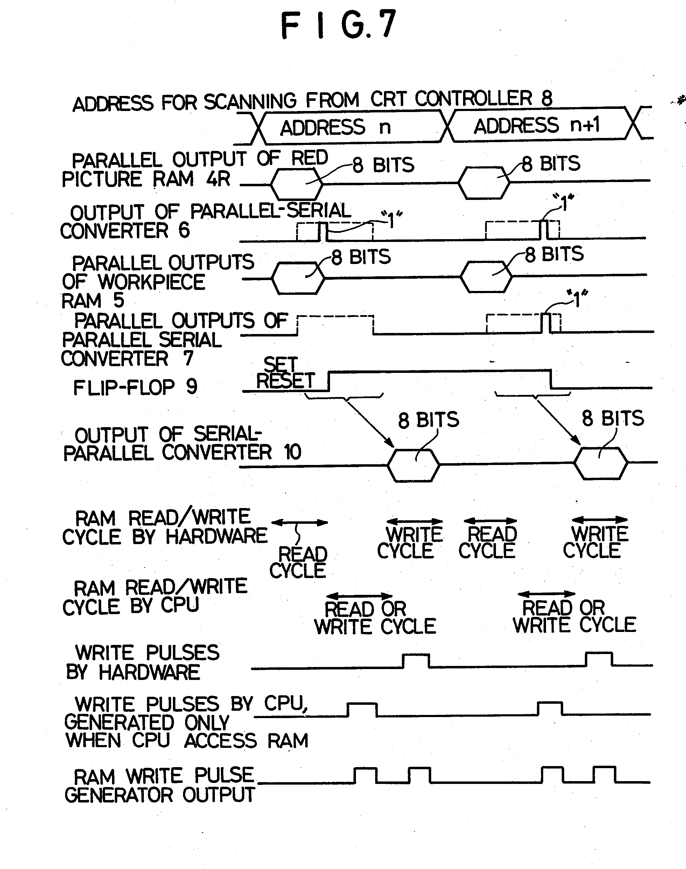

Fig. 7 is a timing chart showing, by way of example, signal waveforms occurring at respective parts of the unit shown in Fig. 2 during the paint-out work by hardware processing.

-12-

In the former stage of a scanning address which is output
from the CRT controller 8, a read cycle is generated to read
out the contents of the red picture RAM 4R and the work RAM 5
in synchronism with each other; the flip-flop 9 is set by a
"1" signal in the converted serial output of the red picture
RAM 4R; and the flip-flop 9 is reset by a "1" signal in the
converted serial output of the work RAM 5.

The output of the flip-flop 9 is converted by the
serial-parallel converter 10 into parallel data and, in the
latter stage of the scanning address, a write cycle is developed to rewrite the content of the red picture RAM 4R by the
output of the serial-parallel converter 9.  Since the red
picture RAM 4R and the work RAM 5 have stored therein the
contour of the graphic form and the terminating points of the
paint-out work, respectively, as referred to previously, the
flip-flop 9 specifies the area to be painted out.  As a result
of this, the red picture RAM 4R is rewritten as shown in Fig.
4E, providing a painted-out plane figure.  Incidentally, during
the paint-out work the display unit is controlled by the microcomputer 1 not to provide a display and, after the paint-out
work, it is turned into an ordinary display mode.  The arrangement which resets the flip-flop 9 by the horizontal synchronizing signal is intended to facilitate the operation of painting
out the entire area of the display screen.

The color graphic display unit for numerical controllers

0117614

-13-

according to this embodiment of the present invention provides a colored display through utilization of such a graphic form producing function as described above.

Fig. 8 schematically shows an example of a displayed picture. Reference numeral 80 indicates a chuck, 81 a blank, 82 a finishing allowance, 83 a finished shape and 84 a tool. They are displayed in different colors. Further, the correspondence between the colors and the graphic forms is also displayed. For instance, in the case of coloring the tool 84 in red, the finished shape 83 in blue, the finishing allowance 82 in green, the blank 81 in yellow and the chuck 80 in purple, the plane figures of the tool 84, the blank 81 and the chuck 80, the plane figures of the finishing allowance 82 and the blank 81 and the plane figures of the finished shape 83 and the chuck 80 are written into the red, green and blue picture RAMs 4R, 4G and 4B, respectively. Of course, the graphic forms may also be displayed in colors different from those mentioned above.

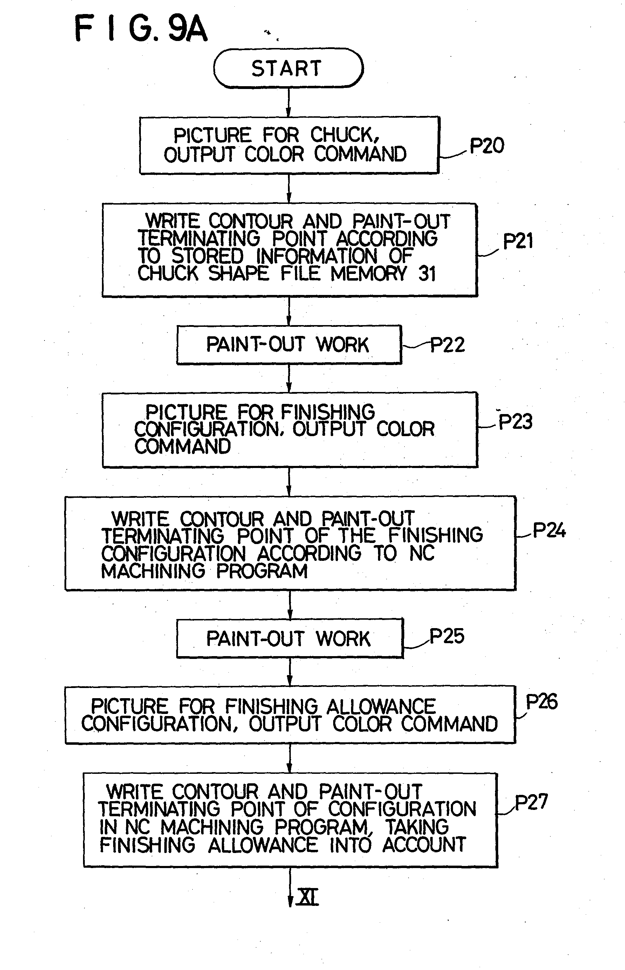

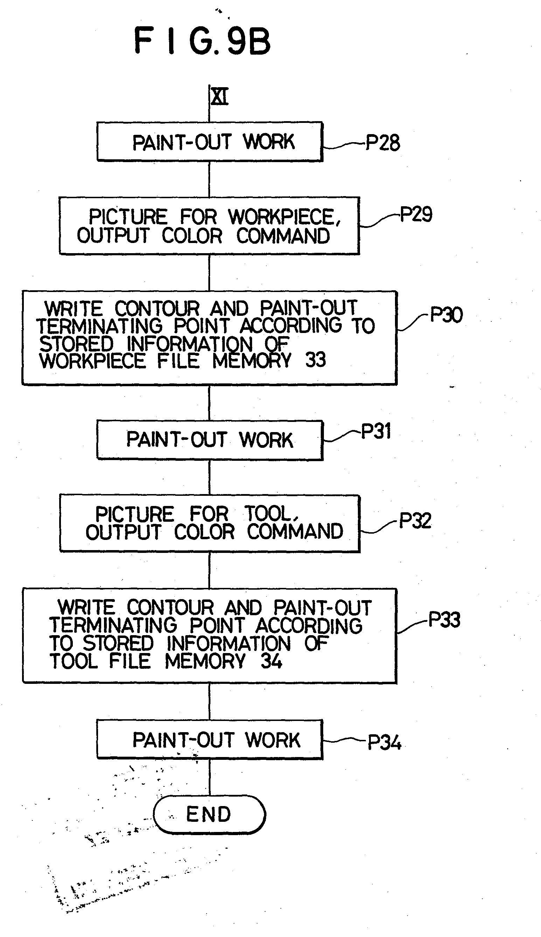

Fig. 9 is a flowchart showing an example of the software arrangement for providing such a display as shown in Fig. 8.

When supplied with a colored display command, the microcomputer 1 reads out color information for the chuck from the color information file memory 30 and selects the picture RAM to be accessed, thereby specifying a color (step P20). Then, the microcomputer 1 reads out from the chuck shape file memory 31 data specifying the shape of the chuck and writes its contour and the terminating points of the paint-out work into the selected picture RAM and the work RAM (step P21). In the chuck shape file memory 31, for example, the coordinate values of respective points such as shown in Fig. 10A are prestored as shown in Fig. 10B. The contents of the chuck shape file memory 31 can be modified by the user.

Upon completion of the contour lines and the paint-out terminating points, the microcomputer 1 carries out the paint-out work by hardware processing, writing the plane figure of the chuck into the selected picture RAM (step P22).

Thereafter, similar operations are repeated (steps P22 to P34), by which the plane figures of the finished shape, the finishing allowance profile, the blank profile and the tool profile are respectively written into the picture RAMs 4R, 4G and 4B which are respectively specified by the color information stored in the color information file memory 30. In this case, the contour line of the finished shape is generated by interpreting a finishing part of the NC machining program stored in the CMOS memory 31, and the contour line of the finishing allowance is generated through using the interpreted results of a roughing part of the NC machining program. The contour line of the blank profile is obtained by reading out the contents of the blank file memory 32 which has stored therein data on the blank profile, the distances from its end face (the underside of the chuck) and so forth, along with the quality of the blank. These operations can be carried out by the same method as has been employed in the past. Further, the contour line of the tool profile is obtained by reading out the contents of the tool file memory 33, since the memory 33 has stored therein contents such, for example, as shown in Fig. 11 by which the profile of the tool can be specified. The contents of the tool file memory 33 can also be modified by the user.

While in the foregoing embodiment the paint-out work of the plane figure is performed by hardware processing, this is intended to increase the processing speed and the paint-out work may also be carried out by software processing as usual.

As has been described in the foregoing, according to the present invention, /the finished shape, since the finishing allowance, the blank profile, the tool profile and the chuck shape are displayed in the form of plane figures (painted-out graphic forms) and in different colors, these profiles are clear at a glance, permitting certain and easy checking of the validity of an NC machining program. Furthermore, even in the case of applying the present invention to an arrangement for displaying the cutting conditions while moving the tool along a machining route, its recognition becomes easier than in the case of displaying it by lines alone.

It will be apparent that many modifications and variations may be effected without departing from the scope of the novel concepts of the present invention.

0117614

-17-

Claims:

A graphic display unit for numerical controllers, comprising:

NC machining program memory means for storing an NC machining program;

blank profile memory means for storing data on the profile of a blank;

chuck shape memory means for storing data on the shape of a chuck;

tool profile memory means for storing/the profile of a tool;
data on

color information memory means for storing information on a color to be used for each profile;

a plurality of picture RAMs, each having storage areas corresponding to dots of a display screen;

graphic form producing means for writing, into those of the plurality of picture RAMs which are specified by the color information, painted-out graphic forms of a finished shape, a finishing allowance profile, a blank profile, a chuck shape and a tool profile produced on the basis of the stored information of the NC machining program memory means, the blank profile memory means, the chuck shape memory means and the tool profile memory means; and

a color graphic display coupled to the outputs of the plurality of picture RAMs to display graphic forms in colors defined by combinations of the picture RAMs.

F I G.1

NC MACHINING PROGRAM MEMORY — MEM1

BLANK PROFILE MEMORY — MEM2

TOOL PROFILE MEMORY — MEM3

CHUCK SHAPE MEMORY — MEM4

COLOR INFORMATION MEMORY — MEM5

GRAPHIC FORM PRODUCING MEANS — CNT

PICTURE RAM — BR₁

PICTURE RAM — BR₂

PICTURE RAM — BRₙ

COLOR GRAPHIC DISPLAY UNIT — DP

1/11

0117614

FIG. 2A

# F I G.2B

VERTICAL SYNCHRONIZING SIGNAL

HORIZONTAL SYNCRONIZING SIGNAL

RED VIDEO SIGNAL

GREEN VIDEO SIGNAL

BLUE VIDEO SIGNAL

CRT CONTROLLER 8

COLOR GRAPHIC DISPLAY UNIT 24

PARALLEL-SERIAL CONVERTER 6

PARALLEL-SERIAL CONVERTER 7

SERIAL-PARALLEL CONVERTER 10

S / R 9

26

20

I

II

III

IV

V

0117614

F I G. 3A

```
┌─────────────────────┐
│   GRAPHIC DATA       │
│ (INCLUDING STRAIGHT  │ ─ P1
│ LINES AND CIRCULAR   │
│ ARCS)                │
└─────────────────────┘
          │
          ▼
┌─────────────────────┐
│ CIRCULAR-STRAIGHT    │ ─ P2
│ CONVERSION           │
└─────────────────────┘
          │
          ▼
┌─────────────────────┐
│ QUADRANT ANALYSIS    │ ─ P3
└─────────────────────┘
          │
          ▼
         P11
    ◇ IS THE DIRECTION
      OF SCANNING COINCIDENT ── NO
      WITH THE X-AXIS ? ◇
          │ YES
          
                    P4
         ◇ FIRST QUADRANT
           OR SECOND QUADRANT ? ◇ ── NO
              │ YES
                    P5
         ◇ IS THE AREA TO BE
           PAINTED OUT ON THE LEFT
           OF STRAIGHT LINE IN ── NO
           THE DIRECTION OF
           ITS ADVANCE ? ◇
              │ YES
```

VI   VII   VIII        IX   X

# FIG. 3B

VI  VII  VIII  IX  X

P7
PERFORM LINEAR INTERPOLATION AND WRITE THE RESULT INTO RAM 4R AND 5R

P6
IS THE AREA TO BE PAINTED OUT ON THE RIGHT OF STRAIGHT LINE IN THE DIRECTION OF ITS ADVANCE ?
NO
YES

P8
PERFORM LINEAR INTERPOLATION AND WRITE THE RESULT INTO RAM 4R

P9
GRAPHIC DATA ENDS ?
NO
YES

P10
END

F I G. 4A

RED

F I G. 4B

$l_2$ $l_3$ $l_4$
$l_1$ $l_5$ $l_6$
$l_7$
$l_{10}$ $l_9$ $l_8$

F I G. 4C

"1"  4R

F I G. 4D

"1"  5

F I G. 4E

"1"  4R

F I G. 5

Y

d  a

X

c  b

F I G. 6

a
d

b

c

# F I G.7

ADDRESS FOR SCANNING FROM CRT CONTROLLER 8

ADDRESS n    ADDRESS n+1

PARALLEL OUTPUT OF RED PICTURE RAM 4R — 8 BITS    8 BITS

OUTPUT OF PARALLEL-SERIAL CONVERTER 6    "1"    "1"

PARALLEL OUTPUTS OF WORKPIECE RAM 5    8 BITS    8 BITS

PARALLEL OUTPUTS OF PARALLEL SERIAL CONVERTER 7    "1"

FLIP-FLOP 9    SET RESET

OUTPUT OF SERIAL-PARALLEL CONVERTER 10    8 BITS    8 BITS

RAM READ/WRITE CYCLE BY HARDWARE    READ CYCLE    WRITE CYCLE    READ CYCLE    WRITE CYCLE

RAM READ/WRITE CYCLE BY CPU    READ OR WRITE CYCLE    READ OR WRITE CYCLE

WRITE PULSES BY HARDWARE

WRITE PULSES BY CPU, GENERATED ONLY WHEN CPU ACCESS RAM

RAM WRITE PULSE GENERATOR OUTPUT

# FIG. 8

CHUCK
FINISHING CONFIGURATION
FINISHING ALLOWANCE
WORKPIECE
TOOL

0117614

0117614

# F I G. 9A

START

PICTURE FOR CHUCK, OUTPUT COLOR COMMAND — P20

WRITE CONTOUR AND PAINT-OUT TERMINATING POINT ACCORDING TO STORED INFORMATION OF CHUCK SHAPE FILE MEMORY 31 — P21

PAINT-OUT WORK — P22

PICTURE FOR FINISHING CONFIGURATION, OUTPUT COLOR COMMAND — P23

WRITE CONTOUR AND PAINT-OUT TERMINATING POINT OF THE FINISHING CONFIGURATION ACCORDING TO NC MACHINING PROGRAM — P24

PAINT-OUT WORK — P25

PICTURE FOR FINISHING ALLOWANCE CONFIGURATION, OUTPUT COLOR COMMAND — P26

WRITE CONTOUR AND PAINT-OUT TERMINATING POINT OF CONFIGURATION IN NC MACHINING PROGRAM, TAKING FINISHING ALLOWANCE INTO ACCOUNT — P27

XI

# F I G. 9B

XI

| PAINT-OUT WORK |—P28

| PICTURE FOR WORKPIECE, OUTPUT COLOR COMMAND |—P29

| WRITE CONTOUR AND PAINT-OUT TERMINATING POINT ACCORDING TO STORED INFORMATION OF WORKPIECE FILE MEMORY 33 |—P30

| PAINT-OUT WORK |—P31

| PICTURE FOR TOOL, OUTPUT COLOR COMMAND |—P32

| WRITE CONTOUR AND PAINT-OUT TERMINATING POINT ACCORDING TO STORED INFORMATION OF TOOL FILE MEMORY 34 |—P33

| PAINT-OUT WORK |—P34

( END )

# F I G. 10B

# F I G. 10A

| P₁ | X | COORDINATE VALUE |
|----|---|------------------|
| P₁ | Z | " |
| P₂ | X | " |
| P₂ | Z | " |
| P₃ | X | " |
| P₃ | Z | " |
| P₄ | X | " |
| P₄ | Z | " |
| | | |

# F I G. 11

| |
|---|
| KIND OF TOOL |
| QUALITY OF TOOL |
| POSITION OF TOOL TIP X |
| POSITION OF TOOL TIP Z |
| DIRECTION OF MOUNTING |
| ANGLE OF CUTTING EDGE |
| NOSE ANGLE |
| NOSE R |
| DIRECTION OF VIRTUAL TOOL TIP |
| NOSE WIDTH |